# FASCICULE DE BREVET EUROPEEN

(11) **EP 4 292 944 B1**
(45) Date de publication et mention de la délivrance du brevet: **13.08.2025**
(21) Numéro de dépôt: 23178850.6
(22) Date de dépôt: 13.06.2023
(51) Int. Cl.: B64D 45/02, F16B 37/14

(54) **CAPUCHON ANTIFOUDRE À DOUBLE COQUILLE À ASSEMBLAGE AMÉLIORÉ**
DOPPELSCHALEN-BLITZSCHLAGSCHUTZKAPPE MIT VERBESSERTER MONTAGE
DOUBLE SHELL LIGHTNING PROTECTION CAP WITH IMPROVED ASSEMBLY

(30) Priorité: 13.06.2022 FR 2205690
(43) Date de publication de la demande: 20.12.2023
(73) Titulaire: HUTCHINSON, 75008 Paris (FR)
(72) Inventeur: NOURRY, Laurent, 37310 SAINT QUENTIN SUR INDROIS (FR); JUTEAU, Théo, 86230 LEIGNE SUR USSEAU (FR); PETITGAS, Thierry, 86130 SAINT GEORGES LES BAILLARGEAUX (FR)
(74) Mandataire: Gevers & Orès

(56) Documents cités:
- EP-A2- 2 713 065
- WO-A1-2014/170674
- GB-A- 2 568 069
- US-B2- 10 982 704
- US-B2- 11 022 164

## Description

### Domaine technique de l'invention

L'invention concerne un capuchon antifoudre pour étanchéifier un élément de fixation attaché à la structure d'un aéronef. L'invention concerne également un dispositif de fixation destiné à être attaché à une structure d'aéronef comprenant un tel capuchon antifoudre.

### Arrière-plan technique

De nombreux aéronefs comprennent des réservoirs de carburant localisés sous leurs ailes. Ces réservoirs de carburant, très souvent utilisés comme réservoirs auxiliaires, sont solidarisés aux ailes de l'aéronef au moyen d'éléments de fixation. Du fait de leur emplacement, ces éléments de fixation, classiquement en métal, sont susceptibles de représenter des points d'impact pour la foudre lorsqu'elle frappe l'aéronef. Compte-tenu du danger que représente le foudroiement d'un tel réservoir de carburant, il a été proposé dans l'état de la technique des capuchons antifoudre pouvant être fixés sur lesdits éléments de fixation, typiquement des rivets ou des boulons. De tels capuchons ont pour fonction première de protéger les éléments de fixation sur lesquels ils sont fixés des impacts de foudre. Toutefois, compte-tenu d'une part de la puissance de ces impacts de foudre et d'autre part de leur répétition, parfois sur le même élément de fixation, des précautions supplémentaires devaient être prises pour éviter une fuite de carburant et les conséquences liées à une telle fuite, notamment un risque d'incendie.

Le document WO 2013/178985 A1 propose des capuchons anti-foudre visant à répondre à une telle problématique. Le capuchon antifoudre présente deux coquilles, l'une intérieure l'autre extérieure, se présentant sous forme de cloches et séparées par une cavité remplie d'un matériau d'étanchéification. À cet égard, la coquille extérieure comprend sur une surface supérieure de la forme en cloche une ouverture permettant de remplir la cavité dudit matériau d'étanchéification, une fois les deux coquilles assemblées. Cela étant, avant de pouvoir effectuer le remplissage de la cavité, il est nécessaire de supprimer le jeu entre les coquilles intérieur et extérieur afin d'éviter que des irrégularités n'apparaissent dans le matériau d'étanchéification à cause d'un éventuel déplacement de la coquille extérieure par rapport à la coquille intérieure.

Diverses solutions ont été proposées dans le document WO 2013/178985 A1 afin de répondre à cette problématique. Une première solution a consisté à structurer la coquille intérieure de sorte à ce que certaines portions de sa surface extérieure forment des moyens de préhension fournissant, après l'encliquetage de la coquille extérieure sur ladite coquille intérieure, des surfaces d'accroche de la coquille extérieure sur la coquille intérieure. Cette solution ne permet pas d'empêcher le jeu angulaire entre la coquille intérieure et la coquille extérieure. En outre, l'assemblage vertical des deux pièces génère des contraintes sur les coquilles, contraintes pouvant dépasser la limite élastique des matériaux utilisés en particulier sur les références les plus petites. Cela a pour conséquence d'augmenter significativement le risque de cassure des coquilles au moment de la fabrication du capuchon antifoudre. Une deuxième solution a consisté à souder ou encoller les deux coquilles avant d'introduire le matériau d'étanchéité dans la cavité. Cependant, cette solution implique une étape d'encollage ou de soudure, en plus de l'étape d'encliquetage de la coquille extérieure sur la coquille intérieure. Une troisième solution a consisté à remplacer les deux coquilles par une unique pièce, par exemple obtenue par fabrication additive. Toutefois, compte-tenu de la complexité des formes des coquilles, il est inutile de dire que le coût de fabrication du capuchon antifoudre ainsi fabriqué est très élevé.

Plus récemment, on a cherché à améliorer l'assemblage de la coquille extérieure et de la coquille intérieure, comme par exemple dans les documents US11022164 B2 ou US10982704 B2. Le document GB 2568069 A divulgue un capuchon antifoudre comprenant une coquille intérieure et une coquille extérieure sur lesquelles sont prévues des moyens d'assemblage de la coquille extérieure avec la coquille intérieure. La coquille intérieure comprend trois fentes régulièrement espacées par lesquelles des protrusions de la coquille extérieure peuvent passer afin de permettre à la coquille extérieure d'atteindre une position de pré-montage. Une fois cette position atteinte, les protrusions de la coquille extérieure sont aptes à tourner autour de l'axe L du capuchon en se logeant sous une arête de la coquille intérieure et en prenant appui sur des surfaces inférieures de l'arête jusqu'à atteindre des protrusions de la coquille intérieure. Le blocage en rotation de la coquille extérieure par rapport à la coquille intérieure n'est pas garanti. En effet, c'est par frottement que les protrusions de la coquille extérieure sont maintenues sur les protrusions de la coquille intérieure. Le montage s'avère donc difficile et/ou approximatif, si la rigidité des protrusions est importante et/ou que les pièces ne sont pas précisément ajustées. De plus, du fait de cet assemblage des coquilles intérieure et extérieure par frottement, la solution présentée dans ce document a tout intérêt à proposer une résistance de frottement la plus élevée possible, par exemple pour permettre au monteur de détecter le contact lorsque les protrusions se chevauchent, et donc de multiplier les zones de contact entre les deux coquilles. C'est ainsi que trois zones de contact sont prévues dans les exemples de réalisation divulgués.

L'invention propose un capuchon antifoudre à double coquille dont l'assemblage est à la fois simple et fiable.

### Résumé de l'invention

L'invention propose à cet égard un capuchon antifoudre pour étanchéifier un élément de fixation attaché à la structure d'un aéronef, le capuchon anti-foudre comprenant une coquille intérieure délimitant un volume intérieur destiné à recevoir l'élément de fixation et une coquille extérieure configurée pour recouvrir la coquille intérieure, lesdites coquilles intérieure et extérieure comprenant des premiers et des deuxièmes moyens de fixation, complémentaires, aptes à coopérer de sorte à permettre l'engagement de la coquille extérieure sur la coquille intérieure.

Le capuchon antifoudre selon l'invention est caractérisé en ce que l'une parmi la coquille intérieure et la coquille extérieure comprend des deuxièmes moyens de fixation, lesdits deuxièmes moyens de fixation comportant au moins un ergot, et en ce que l'autre parmi la coquille intérieure et la coquille extérieure comprend les premiers moyens de fixation parmi lesquels une rampe et une protubérance séparée de la rampe de sorte à former un logement entre la rampe et la protubérance, ladite rampe étant configurée pour permettre le glissement de l'ergot jusqu'au logement lorsque la coquille extérieure est mise en rotation par rapport à la coquille intérieure, de sorte à verrouiller angulairement la coquille extérieure par rapport à la coquille intérieure.

Lorsque la coquille extérieure arrive à sa position finale, ledit au moins un ergot est maintenu fixe dans le logement. En effet, le logement est délimité latéralement par la rampe, d'un côté dudit logement, et par la protubérance, de l'autre côté du logement, ce qui permet de verrouiller angulairement la coquille extérieure par rapport à la coquille intérieure et donc d'assurer le blocage en rotation de la coquille extérieure par rapport à la coquille intérieure. En outre, les points de contact entre la coquille intérieure et la coquille extérieure sont très localisés ce qui permet de limiter le risque de déformations permanentes, voire de casse de le coquille extérieure. Par ailleurs, l'accès de l'ergot au logement s'effectue par l'intermédiaire de la rampe, ce qui permet d'obtenir, pendant l'assemblage, une déformation progressive de la coquille extérieure.

Selon différentes caractéristiques de l'invention qui peuvent être prises ensemble ou séparément :
- les premiers moyens de fixation consistent en un ensemble unique formé par la protubérance et la rampe, la protubérance étant séparée de la rampe de sorte à former le logement ;
- le logement comprend une butée supérieure et ledit au moins un ergot comprend un chant venant en appui avec ladite butée lorsque la coquille extérieure est verrouillée angulairement par rapport à la coquille intérieure, de sorte à verrouiller également axialement la coquille extérieure par rapport à la coquille intérieure ;
- les deuxièmes moyens de fixation comprennent une pluralité d'ergots répartis sur la circonférence d'une surface intérieure de la coquille extérieure ;
- la coquille comprenant les premiers moyens de fixation comprend également une pluralité de protubérances réparties sur la circonférence d'une surface extérieure de ladite coquille intérieure ;
- la coquille intérieure et la coquille extérieure sont faites en polyéthylèneimine ;
- la coquille extérieure présente une forme de cloche ;
- la coquille extérieure comprend une portion évasée et un dôme surmontant la portion évasée, le(s)dit(s) ergot(s) étant situé(s) au niveau de la portion évasée ;
- la coquille intérieure comprend une portion cylindrique et un dôme surmontant la portion cylindrique, la rampe de glissement, la protubérance et le logement étant situés au niveau de la portion cylindrique ;
- la coquille comprenant les premiers moyens de fixation comprend également une protubérance annulaire délimitant la rampe, la protubérance et le logement.

L'invention concerne en outre un dispositif de fixation destiné à être attaché à une structure d'un aéronef comprenant un élément de fixation et un capuchon antifoudre tel que décrit précédemment, dans lequel ledit capuchon antifoudre est monté sur l'élément de fixation de sorte à recouvrir l'élément de fixation.

### Brève description des figures

D'autres objets et caractéristiques de l'invention apparaîtront plus clairement dans la description qui suit, faite en référence aux figures annexées, dans lesquelles :
- La figure 1 est une vue de dessous en perspective d'une coquille intérieure et d'une coquille extérieure d'un capuchon antifoudre selon la présente invention en configuration désassemblée ;
- La figure 2a est une vue de dessous en perspective d'une coquille intérieure d'un capuchon antifoudre selon la présente invention ;
- La figure 2b est une vue de dessus en perspective d'une coquille intérieure d'un capuchon antifoudre selon la présente invention ;
- La figure 3 est une vue latérale d'un capuchon antifoudre selon la présente invention en position assemblée ;
- La figure 4 est une vue en coupe d'un capuchon antifoudre selon la présente invention illustrant certains moyens de fixation de la coquille extérieure et de la coquille intérieure ;
- La figure 5 illustre les étapes d'assemblage d'un capuchon antifoudre selon la présente invention avant le verrouillage de la coquille extérieure sur la coquille intérieure ;
- La figure 6 illustre les étapes d'assemblage d'un capuchon antifoudre selon la présente invention suivants les étapes de la figure 5 jusqu'au verrouillage de la coquille extérieure sur la coquille intérieure.

### Description détaillée de l'invention

L'invention concerne un capuchon antifoudre 1 pour étanchéifier un élément de fixation attaché à la structure d'un aéronef. Comme les capuchons antifoudre décrits dans le préambule de cette description détaillée, le capuchon antifoudre 1 selon l'invention présente un double rôle puisqu'il vise non seulement à protéger l'élément de fixation auquel il est associé mais, de plus, il vise à garantir l'étanchéité de la structure de l'aéronef, au niveau de l'élément de fixation, si ledit élément de fixation venait néanmoins à présenter d'éventuelles fissures suite à un impact de foudre.

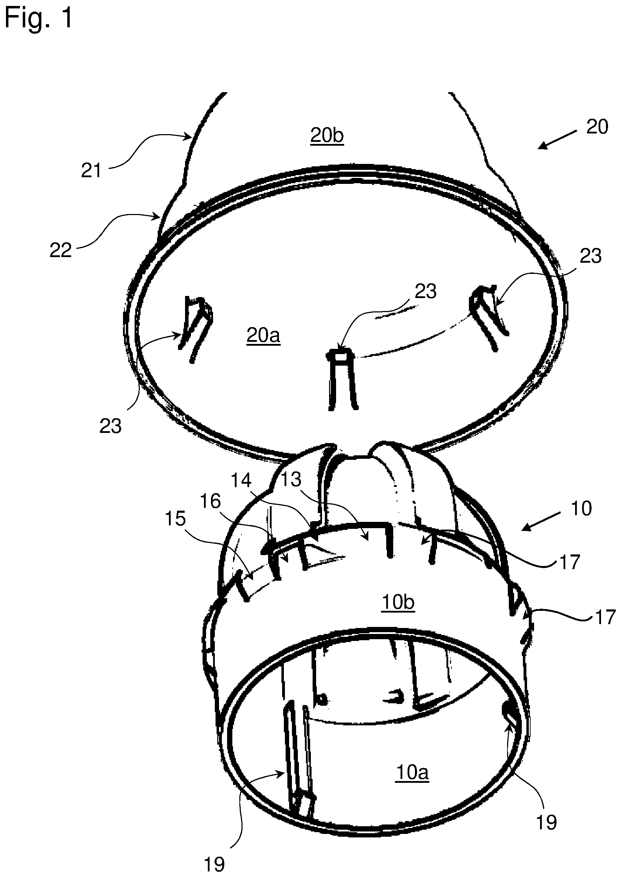

Le capuchon antifoudre 1 comprend une coquille intérieure 10 et une coquille extérieure 20 dont les caractéristiques seront détaillées dans ce qui suit. Tel qu'illustré à la figure 1, le capuchon antifoudre est désassemblé, ce qui permet de mieux distinguer les caractéristiques respectives de la coquille intérieure 10 et de la coquille extérieure 20.

La coquille intérieure 10 délimite un volume intérieur destiné à recevoir l'élément de fixation. La forme et les dimensions du volume intérieur sont donc adaptées à la géométrie de l'élément de fixation utilisé et ne seront pas décrits plus en détail dans la présente description. Néanmoins, la vue en perspective qu'offre la figure 1 depuis le dessous de la coquille intérieure 10 permet de distinguer certains éléments de ladite coquille. La coquille intérieure 10 comprend une pluralité de moyens d'accroche 19 configurés pour permettre la fixation de ladite coquille intérieure 10 sur l'élément de fixation auquel elle est associée. Dans l'exemple de réalisation illustré, les moyens d'accroche 19 se présentent sous la forme de languettes disposées, de préférence régulièrement, sur la circonférence d'une surface intérieure 10a de la coquille intérieure. Toujours selon l'exemple de réalisation illustré, chacune des languettes présente à l'une de ses extrémités une portion en saillie en forme de crocher lui donnant l'aspect d'une patte d'accroche. Chaque languette peut ainsi être fixée de manière fiable et sécurisée à l'élément de fixation auquel elle est associée.

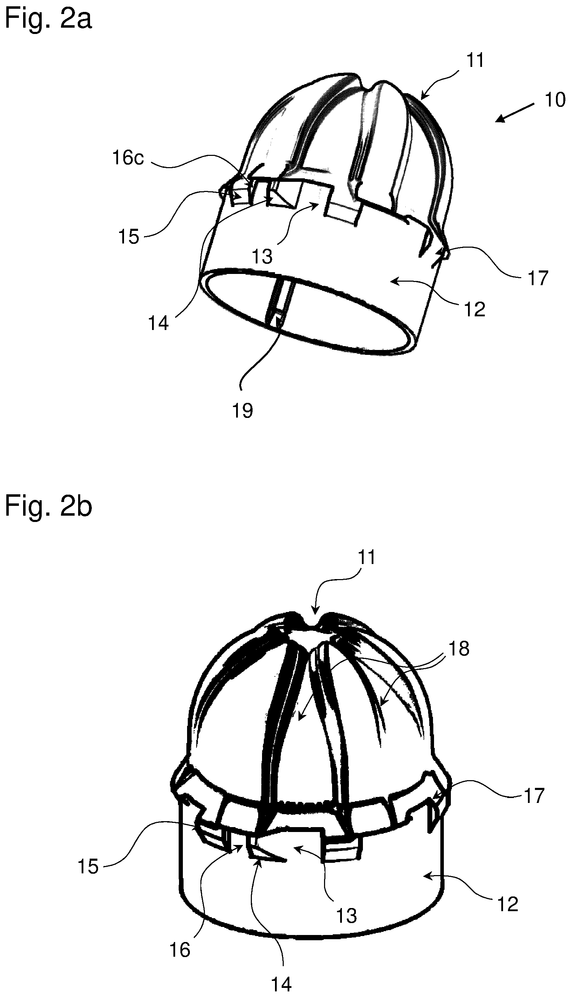

En outre, comme cela est mieux illustré aux figures 2a et 2b, la coquille intérieure 10 comprend une portion cylindrique 12 ainsi qu'un dôme 11 surmontant la portion cylindrique 12. Le dôme 11 comprend une pluralité de cavités 18, de forme prédéterminée, générant un volume inter-coquille suffisant pour permettre l'écoulement du matériau d'étanchéité entre la coquille intérieure 10 et la coquille extérieure 20 lorsque la coquille extérieure 20 est assemblée avec sur la coquille intérieure 10. Le volume inter-coquille désigne le volume séparant la coquille intérieure 10 et la coquille extérieure 20 lorsque la coquille extérieure 20 est assemblée avec la coquille intérieure 10. Les moyens d'accroche 19 mentionnés précédemment se situent sur la surface intérieure 10a de la portion cylindrique 12.

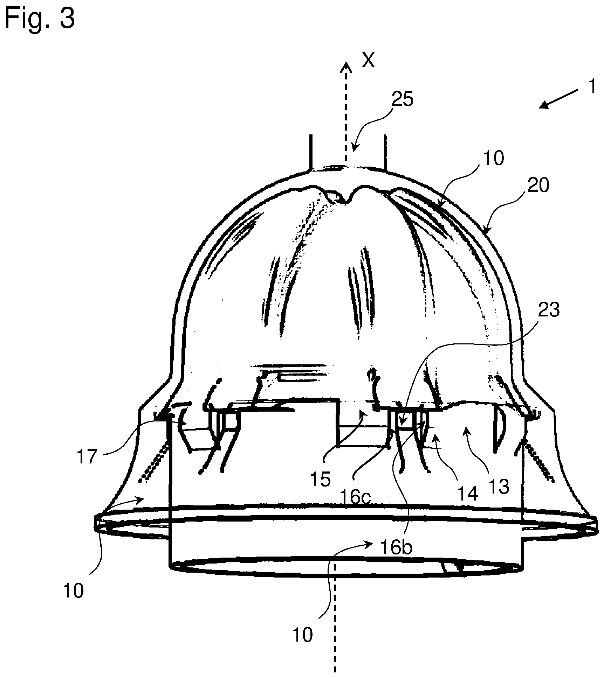

La coquille extérieure 20 est quant à elle configurée pour recouvrir la coquille intérieure 10. Dans l'exemple de réalisation illustré sur les figures, la coquille extérieure 20 comprend une portion évasée 22 et un dôme 21 surmontant la portion évasée, ce qui lui donne une forme de cloche. Comme ceci peut être mieux vu à la figure 3, le dôme 21 de la coquille extérieure présente une courbure sensiblement identique à celle du dôme 11 de la coquille intérieure 10 - sans toutefois comprendre des cavités, ce qui délimite un volume permettant l'introduction du matériau d'étanchéité dans le volume inter-coquille - mais ceci n'est pas obligatoire. En pratique, la forme et les dimensions de la coquille extérieure 20 doivent être appréciées autant que possible en fonction de celles de la coquille intérieure 10, et inversement. À ce propos, la coquille extérieure 20 comprend également une ouverture 25, située au sommet de son dôme 21, formant un passage pour le matériau d'étanchéité lors de la fabrication. Ceci étant dit, outre sa forme, la coquille extérieure 20 présente également des dimensions appropriées pour permettre son positionnement autour de la coquille intérieure 10.

Selon l'invention, les coquilles intérieure et extérieure 10, 20 comprennent des moyens de fixation 14, 15, 16, 16a, 23, 23a, complémentaires, aptes à coopérer de sorte à permettre l'engagement de la coquille extérieure 20 sur la coquille intérieure 10. De manière plus précise, l'une parmi la coquille intérieure 10 et la coquille extérieure 20 comprend les moyens de fixation 14, 15, 16, 16a qui, bien qu'étant distincts des moyens de fixation 23, 23a de l'autre coquille, sont fonctionnellement dépendants desdits moyens de fixation 23, 23a de l'autre coquille. Autrement dit, les moyens de fixations 14, 15, 16, 16a et les moyens de fixation 23, 23a se complètent pour permettre la fixation de la coquille extérieure 20 autour de la coquille intérieure 10. Dans la suite de la présente description, on désignera par « premiers moyens de fixation » les moyens de fixation 14, 15, 16 et 16a et par « deuxièmes moyens de fixation » les moyens de fixation 23 et 23a.

Selon un premier mode de réalisation de la présente invention, la coquille intérieure 10 comprend les premiers moyens de fixations tandis que la coquille extérieure 20 comprend les deuxièmes moyens de fixation. Ce mode de réalisation est l'objet des figures 1 à 6d. Les premiers moyens de fixation comprennent une rampe 14 et une protubérance 15 séparée de la rampe 14 de sorte à former un logement 16.

Dans le mode de réalisation illustré, la rampe 14 se présente sous une forme proche de celle d'une pyramide oblique qui est tronquée à son sommet. La pyramide oblique et tronquée comprend une base, au sens géométrique du terme, située au niveau de la surface extérieure 10b de la coquille intérieure. Sa hauteur, également au sens géométrique du terme, correspond à la distance séparant le sommet tronqué de la pyramide de la surface extérieure 10b de la coquille intérieure. En outre, il convient de préciser que du fait de son obliquité, la rampe 14 présente une inclinaison prédéterminée, dans le cas d'espèce et de manière avantageuse en direction du logement 16. À ce propos, la troncature au sommet de la pyramide est avantageusement arrondie ou courbe ce qui, avec l'inclinaison de la rampe 14, contribue à former une surface, dite surface de glissement, permettant un déplacement progressif de l'un des deuxièmes moyens de fixation. Nous y reviendrons dans la suite de la présente description. Cela étant dit, la rampe 14 n'est pas limitée dans sa forme et peut adopter toute autre forme souhaitée, dans la mesure où elle accompagne le déplacement du deuxième moyen de fixation précité dans le logement 16 et que comme ceci est expliqué dans la suite elle forme une butée latérale pour ce deuxième moyen de fixation.

Le logement 16 est délimité latéralement d'un côté par la rampe 14 et de l'autre côté par la protubérance 15. Ainsi, il comprend une première butée latérale 16b formée par le côté de la rampe 14 le délimitant (Fig. 3) et une deuxième butée latérale 16c formée par le côté de la protubérance 15 le délimitant (Figs. 2a, 3, 4). Cela permet d'obtenir un assemblage de la coquille extérieure 20 avec la coquille intérieure 10 sans jeu angulaire entre lesdites coquilles intérieure 10 et extérieure 20. Autrement dit, une telle configuration permet de verrouiller angulairement la coquille extérieure 20 par rapport à la coquille intérieure 10 lorsque la coquille extérieure 20 est mise en rotation autour de la coquille intérieure 10.

À ce propos, outre le fait que le logement 16 occupe un emplacement intermédiaire entre la rampe 14 et la protubérance 15, il présente très avantageusement des dimensions ajustées à celles des deuxièmes moyens de fixation 23, 23a. Les dimensions du logement 16 sont dites « ajustées » à celles des deuxièmes moyens de fixation 23, 23a, lorsque les première et deuxième butées latérales 16b, 16c sont au plus près des bords du moyen de fixation 23 de la coquille extérieure 20, en tout état de cause de sorte à ce que cette dernière soit verrouillée autour de la coquille intérieure 10. En outre, à l'instar de la rampe 14, la forme du logement 16 n'est pas limitée au mode de réalisation illustré. Ce qui importe dans le cadre de l'invention, c'est que le logement 16 soit dimensionné de manière à permettre le verrouillage angulaire de la coquille extérieure 20 par rapport à la coquille intérieure 10.

Dans le mode de réalisation illustré, la protubérance 15 se présente quant à elle sous une forme approchant celle d'un demi-prisme hexagonal dont une base est située au niveau de la surface extérieure 10b de la coquille intérieure et une hauteur est préférablement sensiblement égale à celle de la hauteur de la rampe 14, la base et la hauteur s'entendant au sens géométrique du terme. La hauteur correspond ici à la distance séparant la base du demi-prisme hexagonal et sa face la plus éloignée de sa base. Comme la rampe 14 et le logement 16, la forme de la protubérance 15 n'est pas limitative, ce qui importe étant que la protubérance 15 soit configurée pour former la butée latérale pour l'ergot 23, ce qui est obtenu par sa simple présence d'un côté du logement 16.

Comme cela apparaît sur les figures, la rampe 14, la protubérance 15 et le logement 16 sont situés au niveau de la portion cylindrique 12 sur la surface extérieure 10b de la coquille intérieure 10. Ils sont sensiblement dans le même alignement angulaire que les deuxièmes moyens de fixation, eux-mêmes localisés au niveau de la portion évasée 22 sur une surface intérieure 20a de la coquille extérieure 20, ce qui permet leur coopération et subséquemment le verrouillage de la coquille extérieure 20 par rapport à la coquille intérieure. Ceci peut être observé notamment sur la figure 3 qui montre le capuchon antifoudre 1 selon l'invention en configuration assemblée.

Revenons maintenant à la figure 1 qui permet de distinguer, vue de dessous, certains des deuxièmes moyens de fixation 23 de la coquille extérieure 20. Les deuxièmes moyens de fixation 23 comportent au moins un ergot. De préférence, ils comprennent une pluralité d'ergots répartis sur la circonférence d'une surface intérieure 20a de la coquille extérieure 20. Cela permet d'augmenter la probabilité que la coquille extérieure 20 se verrouille autour de la coquille intérieure 10 dès le premier geste et permet donc de simplifier l'assemblage du capuchon antifoudre 1 selon l'invention. En effet, plus le nombre d'ergots 23 est élevé plus grande est la probabilité que l'un d'eux atteigne la position de pré-montage, telle que décrite dans la suite.

Dans le mode de réalisation illustré, les ergots 23 se présentent sous une forme approchant celle d'une pyramide tronquée, sans toutefois obligatoirement avoir la forme illustrée. La dimension latérale angulaire de chaque ergot 23, à savoir la largeur de chaque ergot, est ajustée aux dimensions du logement 16. Autrement dit, la largeur de chaque ergot 23 est sensiblement égale à la distance séparant la première butée latérale 16b de la deuxième butée latérale 16c sans toutefois excéder cette distance ce qui permet à l'ergot 23 qui atteindra le logement 16 d'être bloqué entre les première et deuxième butées latérales 16b, 16c et permet donc la mise en rotation de la coquille extérieure 20 autour de la coquille intérieure 10 sans jeu angulaire entre lesdites coquilles intérieure 10 et extérieure 20. En alternative à des ergots 23, on pourrait utiliser des crochets. Dans ce cas, il conviendrait d'avoir un logement 16 dont la forme est plus adaptée à une telle configuration. En tout état de cause, la forme des deuxièmes moyens de fixation n'est pas limitative comme indiqué ci-avant. Il suffit qu'elle soit adaptée en termes de dimensions à celle du logement 16.

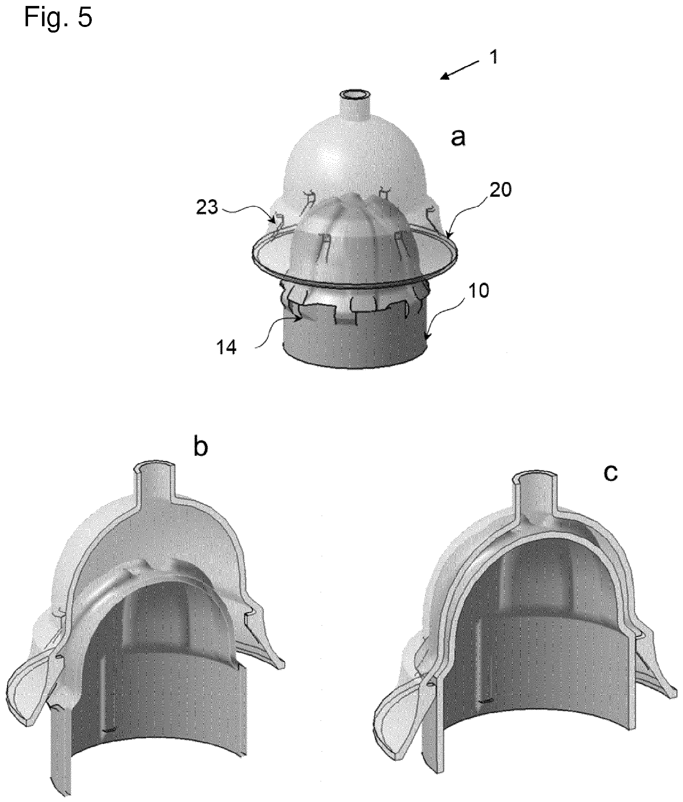

On décrit dans ce qui suit l'assemblage du capuchon antifoudre 1 selon l'invention en référence aux figures 5a à 6d.

Lors d'une première étape, dont certains instants clés sont illustrés aux figures 5a, 5b et 5c, la coquille extérieure 20 est introduite verticalement sur la coquille intérieure 10. De préférence, comme ceci est illustré sur la figure 5a, les ergots 23 sont mis en correspondance avec les cavités 18 du dôme 11. Autrement dit, la position de la coquille extérieure 20 par rapport à la coquille intérieure 10 est choisie de sorte à ce que les ergots 23 soient en vis-à-vis avec les cavités 18 lorsque la coquille extérieure 20 est posée sur la coquille intérieure 10. Les cavités 18 jouent ainsi accessoirement le rôle de moyens d'indexation et facilitent le pré-montage de la coquille extérieure 20 par rapport à la coquille intérieure 10 comme ceci est décrit dans la suite. Cependant, des moyens de repérage peuvent être placés sur la coquille intérieure 10, sans préjudice pour l'assemblage précédemment décrit. Par exemple, deux rainures diamétralement opposées pourraient être positionnées sur la portion cylindrique 12 en correspondance avec des ergots 23 de la coquille extérieure.

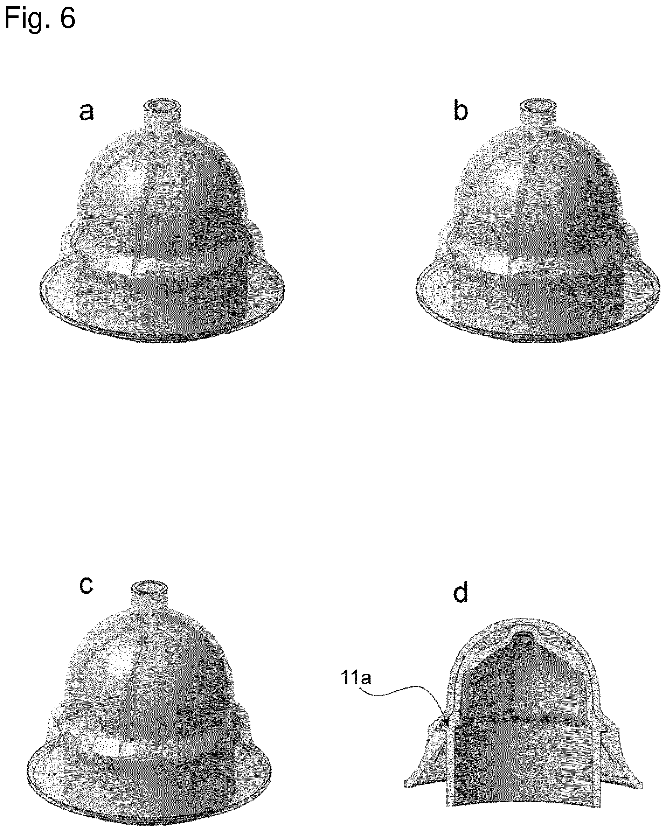

La figure 5c est équivalente à la figure 6a, à la différence que la figure 5c est une vue en coupe du capuchon antifoudre alors que la figure 6a est une vue en perspective. Sur la figure 6a, la coquille extérieure 20 est positionnée par rapport à la coquille intérieure 10 de sorte à être dans une position dite position de pré-montage. Cette position est ainsi appelée car il s'agit de la position dans laquelle se trouve la coquille extérieure 20 préalablement à sa mise en rotation autour de la coquille intérieure 10. À cet égard, la coquille intérieure 10 comprend une zone 13 de pré-montage adjacente à la rampe 14. La coquille extérieure 20 est en position de pré-montage dès lors que l'un des ergots 23 se trouve en correspondance de la zone 13 de pré-montage, c'est-à-dire en vis-à-vis de ladite zone 13 de pré-montage. En pratique, comme cela a été vu précédemment une pluralité d'ergots sont répartis sur la circonférence de la surface intérieure 20a de la coquille extérieure ce qui augmente la probabilité que l'un des ergots 23 atteigne la zone 13 de pré-montage dès le premier geste du monteur. Dès que la coquille extérieure 20 atteint la position de pré-montage, l'ergot 23 considéré est positionné de manière appropriée pour une mise en rotation de la coquille extérieure 20 autour de la coquille intérieure.

Ensuite, comme illustré sur la figure 6b, la coquille extérieure 20 est mise en rotation autour de la coquille intérieure 10. L'ergot 23 glisse progressivement de la zone 13 de pré-montage (Fig. 6a) vers la rampe 14 (Fig. 6b), puis glisse sur la surface de glissement de la rampe 14 (non illustré) avant d'atteindre le logement 16 (Fig. 6c, Cf. également Fig. 3). Lorsque l'ergot 23 passe sur la rampe 14, une contrainte modérée est exercée à la fois sur la coquille intérieure 10 et sur la coquille extérieure 20. Cette contrainte est responsable d'une déformation légère des coquilles intérieure 10 et extérieure 20. À ce propos, ces dernières sont avantageusement faites en polyéthylèneimine (PEl) ce qui leur permet de supporter des contraintes annulaires tout en ayant une tenue suffisante au carburant en cas de fuite. Une fois l'ergot 23 dans le logement 16, l'agencement des butées latérales 16b et 16c par rapport à l'ergot 23 permet le blocage en rotation de la coquille extérieure 20 par rapport à la coquille intérieure 10. Ceci étant dit, la coquille intérieure 10 et la coquille extérieure 11 pourraient également être faites en polyamide 11 ou polyamide 12. Si ces deux matériaux sont très similaires, le polyamide 11 présente l'avantage d'être d'origine renouvelable d'une part et de présenter de meilleures propriétés mécaniques. En effet, il présente une résistance à l'impact et à l'abrasion améliorée en comparaison du polyamide 12, ce qui lui confère une durée de vie plus longue.

À ce stade, on peut sans doute préciser que la coopération entre les premiers moyens de fixation et les deuxièmes moyens de fixation permet un verrouillage angulaire si fiable qu'il n'est pas utile d'adjoindre à l'ensemble formé de la rampe 14 et de la protubérance 15 un deuxième ensemble formé d'une deuxième rampe avec une deuxième protubérance séparée de la deuxième rampe par un deuxième logement. Autrement dit, un seul ensemble formé de la rampe 14 et de la protubérance 15 suffit pour obtenir le verrouillage angulaire de la coquille extérieure 20 par rapport à la coquille intérieure 10 lorsque la coquille extérieure est mise en rotation autour de la coquille intérieure. En outre, cela est très avantageux en ce que l'utilisation d'un unique ensemble formé de la rampe 14 et de la protubérance 15 permet de limiter encore plus le risque de déformations permanentes et de casse de la coquille extérieure via l'ergot 23 concerné.

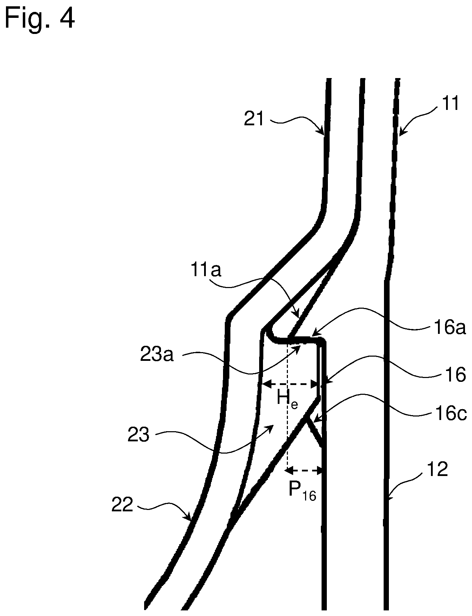

Cela étant dit, il est possible de fiabiliser encore plus l'assemblage de la coquille extérieure 20 avec la coquille intérieure 10. À cet égard, comme ceci est illustré à la figure 4, le logement 16 comprend une butée supérieure 16a avec laquelle un chant 23a de l'ergot est apte à venir en appui lorsque la coquille extérieure 20 est verrouillée angulairement par rapport à la coquille intérieure 10. Cela permet de verrouiller axialement la coquille extérieure 20 par rapport à la coquille intérieure 10. L'axe auquel il est fait référence ci-avant est un axe X longitudinal du capuchon antifoudre 1 selon l'invention. Ainsi, dès que l'ergot 23 atteint le logement 16, les coquilles intérieure 10 et extérieure 20 ne peuvent plus effectuer de mouvement l'une par rapport à l'autre car l'ergot 23 est en liaison encastrement avec le logement 16 (blocage angulaire par la rampe 14 et la protubérance 15 qui sont des butées et blocage axial par la butée supérieure 16a). Autrement dit, seule une dégradation, i.e. une altération structurelle définitive, du capuchon antifoudre 1 de l'invention leur permettrait de bouger de nouveau l'une par rapport à l'autre. Du fait de la présence des butées latérales 16b et 16c ainsi que de la butée supérieure 16a, une très grande force serait nécessaire pour atteindre un tel but, de toute évidence non souhaité dans le cadre de la présente invention.

Précisons qu'il n'est pas nécessaire que la face de l'ergot 23 en vis-à-vis d'un fond du logement 16 soit en appui sur le fond du logement 16, le fond du logement 16 correspondant à la face du logement 16 située au niveau de la surface extérieure 10b de la coquille intérieure 10. La pérennité du blocage en translation est en effet assurée par la zone de contact entre le chant 23a et la butée supérieure 16a du logement. À ce propos, dans le mode de réalisation illustré, la butée supérieure 16a est formée par une protubérance annulaire 11a s'étendant sur toute la circonférence de la coquille intérieure 10 dans la zone jouxtant à la fois le dôme 11 et la portion cylindrique 12. La protubérance annulaire 11a est donc située à la base du dôme 11 de la coquille intérieure. Outre le logement 16, la protubérance annulaire 11a délimite également la rampe 14 et la protubérance 15, notamment leur face supérieure respective.

Précisons également que la hauteur Hₑ des ergots est ajustée à la hauteur de la rampe 14 et à la profondeur P₁₆ du logement 16. La hauteur Hₑ de l'ergot correspond à la distance séparant la face destinée à se trouver en vis-à-vis du fond du logement 16 et la surface intérieure 20a de la coquille extérieure (Fig. 4). La profondeur P₁₆ du logement désigne quant à elle la distance entre une extrémité distale de la protubérance formant la butée supérieure 16a et le fond du logement. La hauteur Hₑ des ergots est choisie de manière à permettre le passage des ergots sur la rampe 14 tout en étant suffisante pour maintenir l'ergot 23 dans le logement 16 une fois qu'il a atteint ledit logement. En effet, comme ceci peut être déduit de ce qui précède, la hauteur Hₑ de l'ergot détermine également la surface de contact disponible avec le chant 23a.

En outre, si la combinaison des premiers moyens de fixation 14, 15 et 16 avec les deuxièmes moyens de fixation 23 et 23a suffit pour atteindre le but de l'invention, il est possible de rigidifier encore plus l'assemblage des coquilles. En effet, la coquille intérieure 10 peut comprendre, outre la protubérance 15, une pluralité d'autres protubérances 17 réparties sur la surface extérieure 10b de la coquille intérieure. Les autres protubérances 17 peuvent avantageusement présenter une forme similaire à celle de la protubérance 15 associée à la rampe 14 et au logement 16. Les autres protubérances 17 permettent avantageusement d'exercer une pression radiale sur la coquille extérieure 20, ce qui permet de rigidifier l'assemblage des coquilles. Accessoirement, comme ceci est illustré sur la figure 3, les autres protubérances 17 peuvent également servir de surfaces d'appui pour les ergots 23. Toutefois, un tel arrangement n'est pas obligatoire pour la poursuite de l'objectif de l'invention. En effet, le verrouillage angulaire de la coquille extérieure 20 par rapport à la coquille intérieure 10 est assuré par le verrouillage de l'ergot 23 dans le logement 16, notamment entre les butées latérales 16b, 16c.

On notera, que lorsque les coquilles intérieure 10 et extérieure 20 sont ainsi assemblées (Figs. 3 et 6d), la surface extérieure 10b de la coquille intérieure et la surface intérieure 20a de la coquille extérieure sont en contact l'une avec l'autre à l'exception des zones où sont localisées les cavités 18. En effet, pour rappel les cavités permettent de générer un volume inter-coquille suffisant pour permettre l'écoulement du matériau d'étanchéité entre la coquille intérieure 10 et la coquille extérieure 20. Les zones de contact entre la coquille intérieure 10 et la coquille extérieure 20 rigidifient également l'assemblage des coquilles.

Selon un deuxième mode de réalisation du capuchon antifoudre selon la présente invention, la coquille extérieure 20 comprend les premiers moyens de fixation tandis que la coquille intérieure 10 comprend les deuxièmes moyens de fixation. Toutefois, sa mise en œuvre est moins pratique que celle du premier mode de réalisation. On veillera simplement à permuter aussi bien les premiers moyens de fixation et les deuxièmes moyens de fixation que les autres protubérances 17, les premiers moyens de fixation se trouvant sur la surface intérieure 20a de la coquille extérieure et les deuxièmes moyens de fixation se trouvant sur la surface extérieure 10b de la coquille intérieure. En outre, tout ce qui a été dit en ce qui concerne la forme et les dimensions de la coquille intérieure 10 et de la coquille extérieure 20 continue à s'appliquer de même que les exemples de réalisation spécifiques.

Ainsi, dans le deuxième mode de réalisation, le capuchon antifoudre 1 pour étanchéifier un élément de fixation attaché à la structure d'un aéronef comprend la coquille intérieure 10, ladite coquille intérieure 10 délimitant le volume intérieur destiné à recevoir l'élément de fixation, et la coquille extérieure 20, ladite coquille extérieure étant configurée pour recouvrir la coquille intérieure 10. Les coquilles intérieure et extérieure 10, 20 comprennent les premiers et les deuxièmes moyens de fixation 14, 15, 16, 16a, 23, 23a, complémentaires, aptes à coopérer de sorte à permettre l'engagement de la coquille extérieure 20 sur la coquille intérieure 10.

Le capuchon antifoudre 1 selon le deuxième mode de réalisation est caractérisé en ce que la coquille intérieure 10 comprend les deuxièmes moyens de fixation 23, 23a, lesdits deuxièmes moyens de fixation 23, 23a comportant au moins un ergot 23, et en ce que la coquille extérieure 20 comprend les premiers moyens de fixation 14, 15, 16, parmi lesquels la rampe 14 et la protubérance 15 séparée de la rampe 14 de sorte à former le logement 16 entre la rampe 14 et la protubérance 15, ladite rampe 14 étant configurée pour permettre le glissement de l'ergot 23 jusqu'au logement 16 lorsque la coquille extérieure 20 est mise en rotation par rapport à la coquille intérieure 10, de sorte à verrouiller angulairement la coquille extérieure 20 par rapport à la coquille intérieure 10.

L'invention concerne également un dispositif de fixation destiné à être attaché à une structure d'un aéronef comprenant un élément de fixation et un capuchon anti-foudre tel que décrit précédemment. L'élément de fixation peut être une tête de boulon, de vis, etc. Le capuchon antifoudre 1 est monté sur l'élément de fixation de sorte à recouvrir ledit élément de fixation.

## Revendications

1. Capuchon antifoudre (1) pour étanchéifier un élément de fixation attaché à la structure d'un aéronef, le capuchon antifoudre (1) comprenant une coquille intérieure (10) délimitant un volume intérieur destiné à recevoir l'élément de fixation et une coquille extérieure (20) configurée pour recouvrir la coquille intérieure (10), les coquilles intérieure et extérieure (10, 20) comprenant des premiers et des deuxièmes moyens de fixation (14, 15, 16, 16a, 23, 23a), complémentaires, aptes à coopérer de sorte à permettre l'engagement de la coquille extérieure (20) sur la coquille intérieure (10), dans lequel l'une parmi la coquille intérieure (10) et la coquille extérieure (20) comprend les deuxièmes moyens de fixation (23, 23a), lesdits deuxièmes moyens de fixation (23, 23a) comportant au moins un ergot (23), **caractérisé en ce que** l'autre parmi la coquille intérieure (10) et la coquille extérieure (20) comprend les premiers moyens de fixation (14, 15, 16), parmi lesquels une rampe (14) et une protubérance (15) séparée de la rampe (14) de sorte à former un logement (16) entre la rampe (14) et la protubérance (15), ladite rampe (14) étant configurée pour permettre le glissement de l'ergot (23) jusqu'au logement (16) lorsque la coquille extérieure (20) est mise en rotation par rapport à la coquille intérieure (10), de sorte à verrouiller angulairement la coquille extérieure (20) par rapport à la coquille intérieure (10).

2. Capuchon antifoudre (1) selon la revendication 1, dans lequel les premiers moyens de fixation consistent en un ensemble unique formé par la protubérance (15) et la rampe (14), la protubérance (15) étant séparée de la rampe (14) de sorte à former le logement (16).

3. Capuchon antifoudre (1) selon l'une quelconque des revendications 1 ou 2, dans lequel le logement (16) comprend une butée supérieure (16a) et ledit au moins un ergot (23) comprend un chant (23a) venant en appui avec ladite butée (16a) lorsque la coquille extérieure (20) est verrouillée angulairement par rapport à la coquille intérieure (10), de sorte à verrouiller également axialement la coquille extérieure (20) par rapport à la coquille intérieure (10).

4. Capuchon antifoudre (1) selon l'une quelconque des revendications précédentes, dans lequel les deuxièmes moyens de fixation (23) comprennent une pluralité d'ergots répartis sur la circonférence d'une surface intérieure (20a) de la coquille extérieure (20).

5. Capuchon antifoudre (1) selon l'une quelconque des revendications précédentes, dans lequel la coquille (10, 20) comprenant les premiers moyens de fixation (14, 15, 16) comprend également une pluralité de protubérances (17) réparties sur la circonférence d'une surface extérieure (10b) de ladite coquille (10, 20).

6. Capuchon antifoudre (1) selon l'une quelconque des revendications précédentes, dans lequel la coquille intérieure (10) et la coquille extérieure (20) sont faites en polyéthylèneimine (PEI).

7. Capuchon antifoudre (1) selon l'une quelconque des revendications précédentes, dans lequel la coquille extérieure (20) présente une forme de cloche, ladite coquille extérieure (20) comprenant une portion évasée (22) et un dôme (21) surmontant la portion évasée (22), le(s)dit(s) ergot(s) (23) étant situé(s) au niveau de la portion évasée (22).

8. Capuchon antifoudre (1) selon la revendication précédente, dans lequel la coquille intérieure (10) comprend une portion cylindrique (12) et un dôme (11) surmontant la portion cylindrique (12), la rampe (14) de glissement, la protubérance (15) et le logement (16) étant situés au niveau de la portion cylindrique (12).

9. Capuchon antifoudre (1) selon l'une quelconque des revendications précédentes, dans lequel la coquille (10, 20) comprenant les premiers moyens de fixation (14, 15, 16) comprend également une protubérance annulaire (11a) délimitant la rampe (14), la protubérance (15) et le logement (16).

10. Dispositif de fixation destiné à être attaché à une structure d'un aéronef, ledit dispositif de fixation comprenant un élément de fixation et un capuchon antifoudre (1) selon l'une quelconque des revendications précédentes, dans lequel ledit capuchon antifoudre (1) est monté sur l'élément de fixation de sorte à recouvrir ledit élément de fixation.

## Patentansprüche

1. Blitzschlagschutzkappe (1) zum Abdichten eines Befestigungselements, das an der Struktur eines Flugzeugs befestigt ist, wobei die Blitzschlagschutzkappe (1) eine Innenschale (10), die ein Innenvolumen begrenzt, das dazu vorgesehen ist, das Befestigungselement aufzunehmen, und eine Außenschale (20) umfasst, die konfiguriert ist, um die Innenschale (10) zu verdecken, wobei die Innen- und Außenschale (10, 20) erste und zweite Befestigungsmittel (14, 15, 16, 16a, 23, 23a) umfassen, die komplementär sind und dazu geeignet sind, derart zusammenzuwirken, dass sie den Eingriff der Außenschale (20) auf der Innenschale (10) ermöglichen, wobei eine von der Innenschale (10) und der Außenschale (20) die zweiten Befestigungsmittel (23, 23a) umfasst, wobei die zweiten Befestigungsmittel (23, 23a) mindestens einen Zapfen (23) umfassen, **dadurch gekennzeichnet,**
**dass** die andere aus der Innenschale (10) und der Außenschale (20) die ersten Befestigungsmittel (14, 15, 16) umfasst, darunter eine Rampe (14) und einen Vorsprung (15), der von der Rampe (14) derart getrennt ist, dass eine Aufnahme (16) zwischen der Rampe (14) und dem Vorsprung (15) gebildet wird, wobei die Rampe (14) konfiguriert ist, um das Gleiten des Zapfens (23) bis zur Aufnahme (16) derart zu ermöglichen, dass die Außenschale (20) in Bezug auf die Innenschale (10) winklig verriegelt wird, wenn die Außenschale (20) in Bezug auf die Innenschale (10) in Drehung versetzt wird.

2. Blitzschlagschutzkappe (1) nach Anspruch 1, wobei die ersten Befestigungsmittel aus einer einzigen Anordnung bestehen, die aus dem Vorsprung (15) und der Rampe (14) gebildet sind, wobei der Vorsprung (15) derart von der Rampe (14) getrennt ist, dass die Aufnahme (16) gebildet wird.

3. Blitzschlagschutzkappe (1) nach einem der Ansprüche 1 oder 2, wobei die Aufnahme (16) einen oberen Anschlag (16a) umfasst und der mindestens eine Zapfen (23) eine Schmalseite (23a) umfasst, die auf dem Anschlag (16a) aufliegt, wenn die Außenschale (20) in Bezug auf die Innenschale (10) derart winklig verriegelt ist, dass die Außenschale (20) in Bezug auf die Innenschale (10) ebenfalls axial verriegelt wird.

4. Blitzschlagschutzkappe (1) nach einem der vorstehenden Ansprüche, wobei die zweiten Befestigungsmittel (23) eine Vielzahl von Zapfen umfassen, die auf dem Umfang einer Innenfläche (20a) der Außenschale (20) verteilt sind.

5. Blitzschlagschutzkappe (1) nach einem der vorstehenden Ansprüche, wobei die Schale (10, 20), die die ersten Befestigungsmittel (14, 15, 16) umfasst, ebenfalls eine Vielzahl von Vorsprüngen (17) umfasst, die auf dem Umfang einer Außenfläche (10b) der Schale (10, 20) verteilt sind.

6. Blitzschlagschutzkappe (1) nach einem der vorstehenden Ansprüche, wobei die Innenschale (10) und die Außenschale (20) aus Polyethylenimin (PEI) hergestellt sind.

7. Blitzschlagschutzkappe (1) nach einem der vorstehenden Ansprüche, wobei die Außenschale (20) eine Glockenform aufweist, wobei die Außenschale (20) einen aufgeweiteten Abschnitt (22) und eine Kuppel (21), die den aufgeweiteten Abschnitt (22) überragt, umfasst, wobei der (die) Zapfen (23) auf Höhe des aufgeweiteten Abschnitts (22) gelegen ist (sind).

8. Blitzschlagschutzkappe (1) nach dem vorstehenden Anspruch, wobei die Innenschale (10) einen zylinderförmigen Abschnitt (12) und eine Kuppel (11), die den zylinderförmigen Abschnitt (12) überragt, umfasst, wobei die Rampe (14) zum Gleiten, der Vorsprung (15) und die Aufnahme (16) auf Höhe des zylinderförmigen Abschnitts (12) gelegen sind.

9. Blitzschlagschutzkappe (1) nach einem der vorstehenden Ansprüche, wobei die Schale (10, 20), die die ersten Befestigungsmittel (14, 15, 16) umfasst, ebenfalls einen ringförmigen Vorsprung (11a) umfasst, der die Rampe (14), den Vorsprung (15) und die Aufnahme (16) begrenzt.

10. Befestigungsvorrichtung, die dazu vorgesehen ist, an einer Struktur eines Flugzeugs befestigt zu werden, wobei die Befestigungsvorrichtung ein Befestigungselement und eine Blitzschutzkappe (1) nach einem der vorstehenden Ansprüche umfasst, wobei die Blitzschutzkappe (1) derart am Befestigungselement angebracht ist, dass das Befestigungselement verdeckt wird.

## Claims

1. A lightning protection cap (1) for sealing an attachment element attached to the structure of an aircraft, the lightning protection cap (1) comprising an inner shell (10) defining an interior volume for receiving the attachment element and an outer shell (20) configured to cover the inner shell (10), the inner and outer shells (10, 20) comprising complementary first and second attachment means (14, 15, 16, 16a, 23, 23a) capable of cooperating so as to enable the engagement of the outer shell (20) on the inner shell (10), wherein one of the inner shell (10) or the outer shell (20) comprises the second attachment means (23, 23a), said second attachment means (23, 23a) comprising at least one lug (23), **characterized in that** the other of the inner shell (10) and the outer shell (20) comprises the first attachment means (14, 15, 16), including a ramp (14) and a protuberance (15) separated from the ramp (14) so as to form a housing (16) between the ramp (14) and the protuberance (15), said ramp (14) being configured to allow the lug (23) to slide until the housing (16) when the outer shell (20) is rotated relative to the inner shell (10), so as to angularly lock the outer shell (20) relative to the inner shell (10).

2. The lightning protection cap (1) according to claim 1, wherein the first attachment means consists of a single assembly formed by the protuberance (15) and the ramp (14), the protuberance (15) being separated from the ramp (14) so as to form the housing (16).

3. The lightning protection cap (1) according to any one of claims 1 or 2, in which the housing (16) comprises an upper stop (16a) and said at least one lug (23) comprises an edge (23a) bearing against said stop (16a) when the outer shell (20) is locked angularly relative to the inner shell (10), so as also to lock the outer shell (20) axially relative to the inner shell (10).

4. The lightning protection cap (1) according to any one of the preceding claims, wherein the second attachment means (23) comprise a plurality of lugs distributed around the circumference of an inner surface (20a) of the outer shell (20).

5. The lightning protection cap (1) according to any one of the preceding claims, wherein the shell (10, 20) comprising the first attachment means (14, 15, 16) also comprises a plurality of protuberances (17) distributed around the circumference of an outer surface (10b) of said shell (10, 20).

6. The lightning protection cap (1) according to any one of the preceding claims, wherein the inner shell (10) and the outer shell (20) are made of polyethyleneimine (PEI).

7. The lightning protection cap (1) according to any one of the preceding claims, wherein the outer shell (20) is bell-shaped, said outer shell (20) comprising a flared portion (22) and a dome (21) surmounting the flared portion (22), said lug(s) (23) being located at the flared portion (22).

8. The lightning protection cap (1) according to the preceding claim, in which the inner shell (10) comprises a cylindrical portion (12) and a dome (11) surmounting the cylindrical portion (12), the sliding ramp (14), the protuberance (15) and the housing (16) being located at the cylindrical portion (12).

9. The lightning protection cap (1) according to any one of the preceding claims, wherein the shell (10, 20) comprising the first attachment means (14, 15, 16) also comprises an annular protuberance (11a) delimiting the ramp (14), the protuberance (15) and the housing (16).

10. An attachment device intended to be attached to an aircraft structure, said attachment device comprising an attachment element and the lightning protection cap (1) according to any one of the preceding claims, wherein said lightning protection cap (1) is mounted on the attachment element so as to cover said attachment element.
